# EUROPEAN PATENT APPLICATION

(11) **EP 4 591 976 A1**
(43) Date of publication of application: **30.07.2025**
(21) Application number: 24221527.5
(22) Date of filing: 19.12.2024
(51) Int. Cl.: B01J 20/24, B01D 53/02, B01J 20/26, B01J 20/30, C02F 1/28, C08B 37/08, C08L 5/08, C02F 101/20, C02F 101/22, C02F 101/30, C02F 101/34, C02F 101/38

(54) **A METHOD OF PREPARING A CHITIN-BASED POROUS ADSORBENT POLYMERIC MATERIAL**

(30) Priority: 20.12.2023 IT 202300027363
(71) Applicant: Politecnico di Bari, 70126 Bari (IT)
(72) Inventor: NOTARNICOLA, Michele, 70126 Bari (BA) (IT); TODARO, Francesco, 70126 Bari (BA) (IT); SURANNA, Gian Paolo, 70126 Bari (BA) (IT); GRISORIO, Roberto, 70126 Bari (BA) (IT); DI CLEMENTE, Milvia Elena, 70126 Bari (BA) (IT)
(74) Representative: De Tullio, Michele Elio

(57) **Abstract**

The invention relates to a procedure for preparing a chitin-based porous adsorbent polymeric material that uses as starting material a second raw material, specifically carapaces and/or exoskeletons of animals such as molluscs, crustaceans, insects and/or arthropods, or fungi.

The invention also relates to the chitin-based porous adsorbent polymeric material obtainable from said procedure, which is characterized by micrometric-sized pores and a high ratio between surface area and volume, as well as the uses of said material for the adsorption of heavy metals and organic compounds from contaminated sites.

## Description

### Field of the invention

The present invention relates to a procedure for preparing a porous adsorbent polymeric material, to the polymeric porous adsorbent material obtained by the aforementioned procedure and its uses.

### Background of the invention

The presence of persistent pollutants in the environment is notoriously a serious concern.

Technologies conventionally used for environmental remediation, i.e. the elimination of pollutants from contaminated sites, involve the use of both macro and nanostructured adsorbent materials. The range of adsorbent materials described in the state of the art for use in environmental remediation applications includes, for example, activated carbons, zeolites and zerovalent iron.

Among them, the best known materials are activated carbons, whose uses in the purification of water derived from landfill leachate and in the extraction of chlorinated organic compounds and aromatic compounds from liquid substances are described respectively in Italian patents no. 102011901994326 no. 102011902010064. The Italian patent no. 102014902254048 describes the use of activated carbons for the treatment of water or liquids in general.

The use of zeolites for the treatment of water contaminated by polar organic compounds, heavy metal salts or oil is described in Italian patents no. 102010901887179 no. 102010901887180.

Italian patent no. 102011901953383 describes the adsorption of methyl-tert-butyl-ether (MTBE) vapors using a commercial zeolite with a micro-porous structure.

Technologies that use zerovalent iron in the treatment of water contaminated by chlorinated solvents, nitrates and sulfates are described in Italian patents no. 102014902255636 no. 102014902274452.

European patent application EP3891214A describes a process for the preparation of a cellulose-based foam on a nanometric and/or micrometric scale and the use of said foam for the adsorption of oils.

The use of chitin and its derivatives, such as chitosan, for the removal of heavy metals from contaminated waters is also known. For example, Zhang et al, 2019 - Biohybrid Hydrogel and Aerogel from Self-Assembled Nanocellulose and Nanochitin as a High-Efficiency Adsorbent for Water Purification. ACS Appl. Mater. Interfaces 2019, 11, 46714-46725, describe biohybrid aerogels obtained by the self-assembly of negatively charged TEMPO-oxidized cellulose nanofibers and positively charged partially deacetylated chitin nanofibers, carachterized from a porous three-dimensional structure that allows the adsorption of heavy metals and organic pollutants.

A limitation of materials conventionally used as adsorbents for the decontamination of contaminated sites is represented by their selectivity, i.e. the ability to adsorb only certain specific contaminants. In this sector, selectivity represents a disadvantage, since, in the real sites to be remediated - be they water, soil or atmosphere - there is never a single specific type of contaminant, but rather a mixture of pollutants that are also very diversified, so the currently available adsorbent materials are generally poorly performing.

Chitin, which is the second most abundant natural polymer after cellulose, has advantages over cellulose in terms of versatility, as it has a greater number of accessible chemical functionalities and therefore a richer chemical application. For this reason, chitin and chitosan-based materials are finding increasing application in multiple industrial sectors.

Muñoz-Núñez et al, 2022- Chitin Nanocrystals: Environmentally Friendly Materials for the Development of Bioactive Films. Coatings 2022, 12, 144, describe chitin nanocrystals and their use in the preparation of bioactive composite films for biomedical and packaging applications.

The review Kozma et al, 2022 - Chitin, Chitosan, and Nanochitin: Extraction, Synthesis, and Applications. Polymers 2022, 14, 3989, describes methods for the extraction of chitin from crustacean shells, the conversion of chitin to chitosan by deacetylation, the synthesis of nanochitin by TEMPO-mediated oxidation (Fan et al, 2008-Chitin nanocrystals prepare by TEMPO-Mediated Oxidation of α-chitin. Biomacromolecules 2008, 9, 192-198) and the use of nanostructured chitin as an adsorbent for the treatment of contaminated water.

However, there is still a need to develop additional adsorbent materials that improve the properties of currently available adsorbent materials, both in terms of performance (e.g. lower selectivity) and in terms of greater economic and environmental sustainability.

These and other needs are satisfied by the present invention, which provides a procedure for preparing a chitin-based porous adsorbent polymeric material on as defined in the attached claim 1, as well as the chitin-based porous adsorbent polymeric material obtainable from said procedure.

A description of the preparation procedure of the invention, of the chitin-based porous adsorbent polymeric material obtainable from this procedure and of its uses. is provided below for illustrative purposes.

The chitin-based adsorbent porous polymeric material of the invention is prepared starting from chitin extracted from carapaces or exoskeletons of animals, such as arthropods, insects, molluscs and crustaceans, or from fungi. This represents an advantage, since the starting material of the process is constituted by a secondary raw material, i.e. a waste material from the food industry, or in any case a completely natural and eco-friendly raw material.

The already cited review Kozma et al, 2022 provides an overview of the different methodologies available for the extraction of chitin from natural sources such as crustacean shells, which are incorporated here as a citation. Also the review Verardi, Alessandra et al. (2023), Advanced technologies for the recovery of chitin from crustacean waste, Clean Technologies and Recycling. 3. 4-43. 10.3934/ctr.2023002, incorporated herein as a citation, provides an overview of the methodologies available for the extraction of chitin from crustaceans, providing the person skilled in the art with a tool for the selection and development of the most suitable and effective technologies.

The preparation procedure of the present invention first involves the oxidation of chitin in an aqueous basic medium, using the TEMPO-KBr-NaClO oxidation system. In a preferred embodiment of the procedure of the invention, the chitin used as starting material has been extracted from the carapaces or exoskeletons of molluscs or crustaceans. It is also preferable that the chitin used as starting material is α-chitin. It is essential that the oxidation reagents are used in certain ratios in millimoles (mmol) between substrate (chitin) and reagent, i.e.:
chitin/KBr: from 50/10 to 40/10
chitin/TEMPO: from 50/1 to 40/1
chitin/NaClO: from 50/154 to 40/154
The oxidation reaction determines the selective oxidation of the hydroxyl groups in the C6 position of chitin to carboxylic groups. The oxidized chitin thus obtained is characterized by a high concentration of carboxylate groups compared to the N-acetylglucosamine units, while the degree of deacetylation of chitin is only minimally modified.

In a preferred embodiment of the process of the invention, the oxidation reaction is carried out by dispersing the chitin in distilled water together with KBr and TEMPO under magnetic stirring, and subsequently adding NaClO drop by drop, always under magnetic stirring. During the oxidation, it is preferable to monitor the pH of the reaction solution, maintaining it at a constant value of about 11, by adding drop by drop a solution of a strong base at a known concentration, such as a NaOH solution at pH 0.5M.

The oxidized chitin thus obtained is then acidified, preferably by adding a strong acid at a known concentration, such as a 37% v/v HCI solution, until a pH value of about 1 is reached. At this pH value, the oxidized chitin becomes insoluble in water and appears in the form of oxidized chitin nanofibrils.

Since the oxidation of chitin may not have been complete and therefore unoxidized chitin residues may be present, it is preferable to separate the unoxidized chitin residues from the oxidized chitin before acidification. Since unoxidized chitin is insoluble in water, while with oxidation it becomes soluble, the separation can be carried out by centrifugation and elimination of the precipitate. The supernatant obtained from centrifugation is the fraction that contains the oxidized chitin and to which the strong acid is then added for acidification and obtaining the oxidized chitin nanofibrils.
In a preferred embodiment, it is appropriate to perform one or more washing operations of the oxidized chitin nanofibrils after acidification. For this purpose, the acidified supernatant containing the oxidized chitin nanofibrils is centrifuged and distilled water is added to the precipitate while stirring. The centrifugation and washing operations with distilled water can be repeated several times (e.g. 3 times), until a final precipitate is obtained.
The final precipitate is then subjected to the reaction with the branching agent bPEI 25 kDa, preferably by redispersing it in distilled water together with the branching agent. It is preferable to leave the reaction mixture under magnetic stirring and then sonicate it to allow complete dispersion. The product obtained from this reaction is a polymeric material based on oxidized chitin with a branched structure.
This branched polymeric material is then subjected to freezing, for example at -30°C for one night. The ice crystals that form during the freezing process will give the internal three-dimensional structure to the material. The frozen material is then subjected to extraction with ethanol, for example using a Soxhlet extractor, so that the space occupied by the ice crystals is occupied by liquid ethanol, which is then removed by evaporation, thus determining the formation of a porous three-dimensional structure. The passage of ethanol inside the material also allows the elimination of any residues of reagents that have not reacted.

In the final phase of the preparation process of the invention, the porous material with a three-dimensional structure is dried, preferably under vacuum for about 2 hours, in such a way as to obtain a dried final product insoluble in water, ready for use as an adsorbent.

The chitin based adsorbent porous polymeric material obtained from the process described above has a spongy structure, both before and after drying, and is characterized by the presence of micrometric-sized pores and a high surface area/volume ratio. These characteristics make it particularly suitable for use in remediation applications of sites (water, soil or atmosphere) contaminated by pollutants. In particular, the experiments carried out by the present inventors have demonstrated that this material has good adsorption properties both for heavy metals, such as cadmium and chromium, and for organic compounds, such as 4-nitrophenol, 4-nitrobenzaldehyde and/or methylene blue.

The following examples are provided for illustrative purposes only and are not intended to limit the scope of the invention as defined in the appended claims.

### Example 1 (preparatory example)

8.1 g of α-chitin were dispersed in 450 mL of distilled water, together with 1.19 g of potassium bromide, 0.156 g of TEMPO (2,2,6,6-tetramethylpiperidin-1-oxyl). After leaving the solution under magnetic stirring for 1 hour, 75 mL of sodium hypochlorite were added dropwise, for a time of about half an hour. The compound was left under magnetic stirring for 2 hours during which the pH was monitored, maintaining it at 11 by gradually adding a 0.5 M sodium hydroxide solution. At this point the solution was centrifuged for 10 minutes at 2150 RCF, and the precipitate consisting of residues of non-oxidized chitin was eliminated. Aliquots of 37% v/v of HCI were added to the supernatant until a pH of 1 was reached.

The solution was centrifuged again for 10 minutes at 2150 RCF, the supernatant was discarded and the washing was carried out, that is, distilled water was added to the precipitate, the compound was manually mixed with water and centrifuged for 10 minutes at 2150 RCF, after which the supernatant was discarded. These steps can be repeated three times.

The final precipitate (71.25 g) was redispersed in 120 ml of distilled water, with 9.85 g of bPEI with a molecular weight of 25 kDa. The whole was left under magnetic stirring for one hour and then sonicated for half an hour to allow complete dispersion.

The suspension was poured into Soxhlet thimbles and frozen overnight at -30° C. The ice crystals that form during the freezing process will give the internal three-dimensional structure of the material. The frozen material was inserted into a Soxhlet extractor with 500 ml of ethanol. In this way the space occupied by the ice crystals is occupied by the liquid ethanol. The liquid ethanol was evaporated, thus allowing air to replace it. The passage of ethanol inside the material allows to simultaneously eliminate any residues of reagents that have not reacted. After 24 hours, the material was dried under vacuum for about two hours, obtaining a dried material insoluble in water, ready to be stored and then used. Both before and after drying, the material obtained has a spongy structure.

### Example 2 (characterization)

The chitin-based porous polymeric material with a spongy structure obtained in Example 1 was characterized chemically by IR analysis (ATR) and morphologically by scanning electron microscope images (SEM).

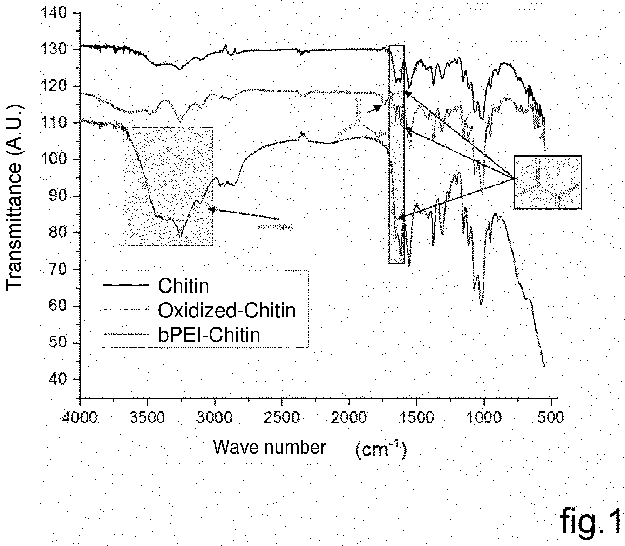

Figure 1 shows the spectra of the chitin as is (top curve), of the oxidized and acidified chitin (middle curve), and of the spongy material obtained in Example 1 (bPEI-Chitin) (bottom curve). In the IR spectrum of the oxidized chitin, the oxidation signal is visible at 1741 cm ⁻¹ associated with the stretching of the C=O bond of the carboxylic groups, which disappears in the spectrum of bPEI-Chitin due to the formation of amino and amide bonds (1624 cm ⁻¹ and 1544 cm ⁻¹ ) generated by the addition of bPEI.

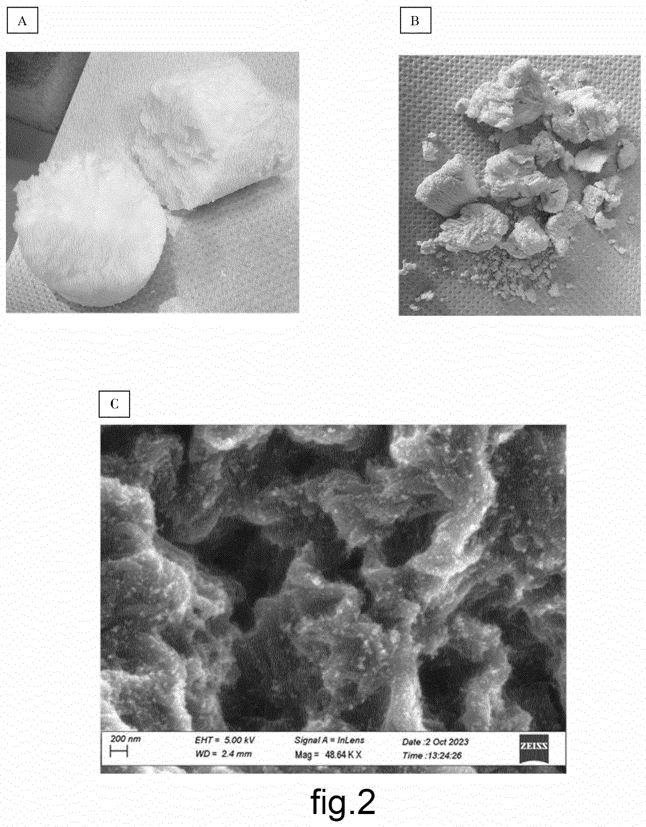

Figure 2A is a photograph of the bPEI-Chitin sponge material of Example 1 after purification in the Soxhlet. Figure 2B is a photograph of the bPEI-Chitin sponge material of Example 1 after drying (B). Figure 2C is an image of the structure of the bPEI-Chitin sponge material of Example 1 obtained by scanning electron microscopy (SEM). The SEM image highlights the microstructure of the material, with pores having an average diameter ranging from 400 µm to 1 mm, which allows us to define this material as microstructured.

### Example 3 (contaminant adsorption test)

The sponge material obtained in example 1 (bPEI-Chitin) was tested for the adsorption of organic compounds and heavy metals. The adsorption tests with organic molecules (4-nitrophenol, 4-nitrobenzaldehyde and methylene blue) were conducted for 24 hours, under magnetic stirring using 10 ml of monocontaminated solution and 100 mg of adsorbent material. The solutions used had a starting concentration of about 10 ⁻⁵ M, a necessary condition to allow the application of the Lambert-Beer law that allows to obtain the concentration of the solution, while the absorbance is known. The solutions were analyzed with a UV-Vis spectrophotometer at zero time, i.e. before the solution came into contact with the adsorbent material. The subsequent measurements were carried out at progressive time intervals.

The procedure for heavy metals involves the use of 15 ml of a monocontaminated solution and 12 mg of adsorbent material. The samples were left on atilt shaker. After 24 hours, the samples were filtered and analyzed by plasma spectroscopy (ICP-OES). The data reported in the figures are the average of 3 experiments.

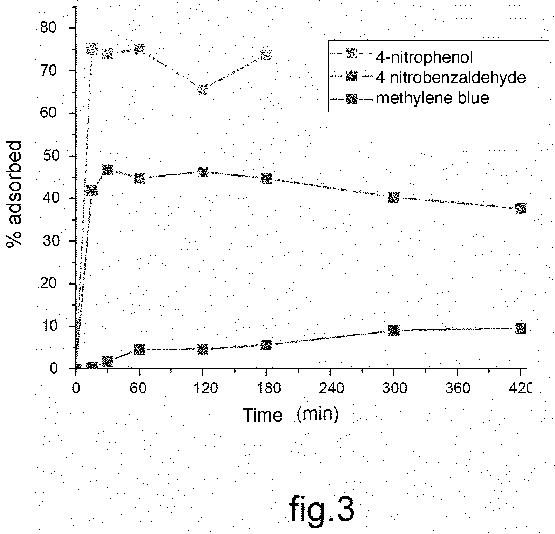

Figure 3 shows the adsorption kinetics of three organic molecules (4-nitrophenol, 4-nitrobenzaldehyde and methylene blue). Experimental results show an adsorption efficiency of about 90% (specifically for 4-nitrophenol) in a reaction time of 3 hours. Furthermore, the adsorption capacity of the material was found to be a function of the molecular weight of the target contaminant.

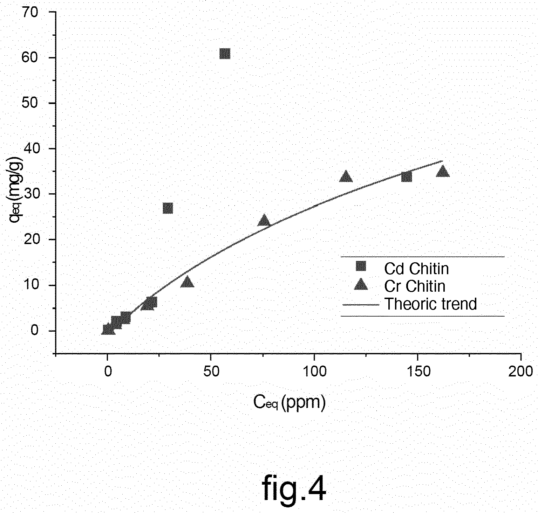

Figure 4 shows the maximum adsorption capacity of two heavy metals (cadmium and chromium). The adsorbent material showed a higher affinity towards cadmium (maximum adsorption capacity of about 61 mg/g) than towards chromium (maximum adsorption capacity of about 35 mg/g).

## Claims

1. A procedure for preparing a chitin-based porous adsorbent polymeric material, comprising the steps of:
1) providing chitin as a starting material, where said chitin has been extracted from a natural secondary raw material;
2) oxidizing said chitin in a aqueous basic medium using NaClO (sodium hypochlorite), TEMPO (2,2,6,6-tetramethylpiperidin-1-oxyl) and KBr (potassium bromide) as oxidation reagents, wherein the ratios between chitin (mmol) and oxidation reagents (mmol) are as follows:
chitin/KBr: from 50/10 to 40/10
chitin/TEMPO: from 50/1 to 40/1
chitin/NaCIO: from 50/154 to 40/154
thereby obtaining oxidized chitin;
3) acidifying the oxidized chitin;
4) functionalizing said oxidized chitin in water with branched polyethyleneimine (bPEI) having a molecular weight of 25 kDa, thus obtaining a chitin-based polymeric material having a branched structure;
5) freezing the chitin-based polymeric material having a branched structure, thus obtaining a frozen material;
6) extracting said frozen material with ethanol;
7) evaporating ethanol to obtain a chitin-based porous adsorbent polymeric material; and
8) drying the chitin-based porous adsorbent polymeric material, thus obtaining a water-insoluble dried chitin-based porous adsorbent polymeric material.

2. The procedure according to claim 1, wherein said natural secondary raw material consists of carapaces or exoskeletons of molluscs, crustaceans, insects and/or arthropods, or of fungi.

3. The procedure according to claim 1 or 2, wherein the chitin used as starting material is α-chitin.

4. The procedure according to anyone of claims 1 to 3, wherein the chitin oxidation is performed by dispersing the chitin in distilled water together with KBr and TEMPO, agitating and then adding NaClO drop by drop.

5. The procedure according to claim 4, wherein in the oxidation reaction the pH is maintained at a constant value of approximately 11.

6. The procedure according to anyone of claims 1 to 5, wherein, prior to acidifying, the non-oxidized chitin residues possibly present are separated from the oxidized chitin by centrifugation.

7. The procedure according to anyone of claims 1 to 6, wherein the chitin-based polymeric material having a branched structure is frozen at -30°C for about 24 hours.

8. A chitin-based porous adsorbent polymeric material obtainable by the procedure according to anyone of claims 1 to 7.

9. The chitin-based porous adsorbent polymeric material according to claim 8, which is microstructured and comprises pores with an average diameter ranging from 400 µm to 1 mm.

10. Use of chitin-based porous polymeric adsorbent material according to claim 8 or 9, in the adsorption of organic and/or heavy metal compounds from contaminated sites.

11. Use according to claim 10, wherein said contaminated sites are water, soil or air.

12. Use according to claim 10 or 11, wherein said organic compounds are 4-nitrophenol, 4-nitrobenzaldehyde and/or methylene blue and said heavy metals are cadmium and/or chromium.
